Europäisches Patentamt

(19)　European Patent Office

Office européen des brevets

(11)　**EP 0 704 277 A1**

## (12)　EUROPEAN PATENT APPLICATION
published in accordance with Art. 158(3) EPC

(43)　Date of publication:
03.04.1996　Bulletin 1996/14

(21)　Application number: 95912437.1

(22)　Date of filing: 16.03.1995

(51)　Int. Cl.$^6$: **B23Q 35/12**

(86)　International application number: **PCT/JP95/00457**

(87)　International publication number:
**WO 95/28253 (26.10.1995　Gazette 1995/46)**

(84)　Designated Contracting States:
**CH DE IT LI**

(30)　Priority:　**15.04.1994 JP 76948/94**

(71)　Applicant: **FANUC LTD.**
**Minamitsuru-gun, Yamanashi 401-05 (JP)**

(72)　Inventor: **MATSUURA, Hitoshi**
**Keio Yamada Mansion 2-202**
**Tokyo 193 (JP)**

(74)　Representative: **Brunner, Michael John**
**GILL JENNINGS & EVERY**
**Broadgate House**
**7 Eldon Street**
**London EC2M 7LH (GB)**

### (54)　PROFILE CONTROL SYSTEM

(57)　More accurate digitizing data are obtained in a profile control system for profile measurement of a shape of a surface of a model. When a tracer head (1) profiles a surface of the model (2), position detecting means (3) detects a position of the tracer head (1), and when displacement detecting means (4) detects a displacement of a stylus (1a) provided on the tracer head (1), profile data storage means (5) stores detected positions and displacements at a predetermined cycle. Positional increment calculating means (6) detects positions and displacements for respective axes of a profile plane at a predetermined cycle, and correct for an increment from a value of a position, which was detected last time, by means of a displacement to calculate the increment as a positional increment. Movement vector value calculating means (7) calculates a movement vector value in the last movement interval on the basis of the calculated positional increment, and axial movement control means (8) controls an axial movement of the tracer head (1) with the calculated movement vector value taken as a profile direction in the present movement interval.

FIG. 1

## Description

### TECHNICAL FIELD

The present invention relates to a profiling control system for measuring the shape of a model surface through profiling operation, and more particularly to a profiling control system for profiling a model surface with a stylus.

### BACKGROUND ART

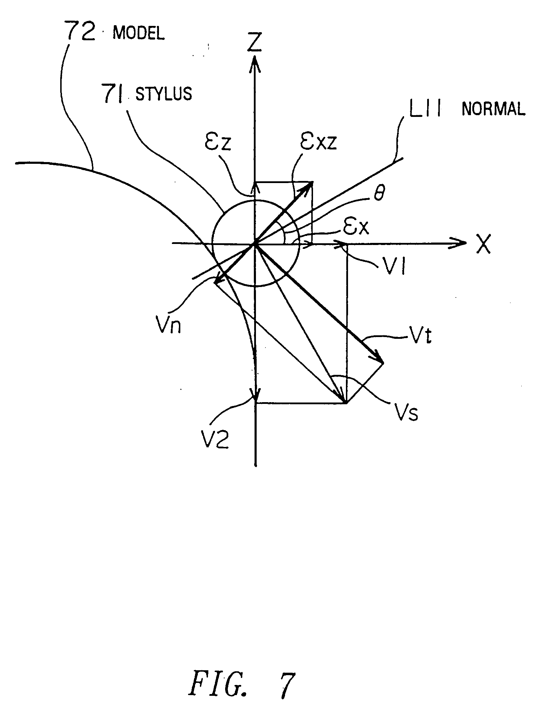

FIG. 7 of the accompanying drawings shows a conventional profiling control system for profiling a model surface with a stylus that is held in contact with the model surface. In FIG. 7, a profiling plane in which the model surface is to be profiled comprises an X-Z plane. In the conventional profiling control system, when the surface of a model 72 is traced by the tip end of a stylus 71, the combined displacement $\varepsilon$ of displacements $\varepsilon x$, $\varepsilon y$, $\varepsilon z$ of the stylus 71 in the directions of respective axes is calculated, and a direction perpendicular to a vector component $\varepsilon xz$, projected onto the profiling plane, of the vector of the combined displacement $\varepsilon$ is calculated as a feed direction for profiling. A feed speed Vt for profiling and a corrective speed component Vn as a value for correcting the feed speed Vt are calculated, thereby determining a corrected feed speed Vs. The corrected feed speed Vs is divided into speed components V1, V2 on profiling plane axes X, Z as represented by the following equations (11), (12), respectively:

$$V1 = Vt \cdot \sin\theta - Vn \cdot \cos\theta \qquad (11),$$

$$V2 = - Vt \cdot \cos\theta - Vn \cdot \sin\theta \qquad (12)$$

where $\theta$ is the angle of the vector component $\varepsilon xz$ of the combined displacement $\varepsilon$ with respect to the X-axis. The feed speed Vt is Vt > 0 if the feed direction is positive, and the corrective speed component Vn is Vn > 0 if the combined displacement $\varepsilon$ of the stylus 71 is greater than a reference displacement $\varepsilon 0$.

During a profiling control mode, the speed components V1, V2 can be determined at all times, and the stylus 71 is controlled for its movement according to these speed components V1, V2.

In the conventional profiling control system, each time the vector component $\varepsilon xz$ of the combined displacement $\varepsilon$ deviates from a normal L1 to the surface of the model 72, the corrective speed component Vn is generated, and the feed speed Vt is corrected thereby into the corrected feed speed Vs. Since the feed speed Vt is corrected continuously in the profiling control mode, the stylus 71 tends to move along a tortuous track, with the results that the profiling path becomes unstable and digitized data become inaccurate.

### DISCLOSURE OF THE INVENTION

The present invention has been made in view of the above problems. It is an object of the present invention to provide a profiling control system capable of performing stabler profiling operation and generating more accurate digitized data.

To achieve the above object, there is provided a profiling control system for measuring the shape of a model surface through profiling operation, comprising position detecting means for detecting a position of a tracer head, displacement detecting means for detecting a displacement of a stylus mounted on the tracer head, profiling data storing means for storing the detected position and the detected displacement in each of predetermined periodic cycles, positional increment calculating means for detecting the position and the displacement with respect to each of axes of a profiling plane in each of the predetermined periodic cycles, and correcting an increment from a preceding detected position with an increment from a preceding detected displacement, thereby calculating a positional increment, movement vector calculating means for calculating a movement vector in a preceding movement zone based on the calculated positional increment, and axis movement control means for controlling movement along the axes of the tracer head using the calculated movement vector as a profiling direction in a present movement zone.

When the position detecting means detects the position of the tracer head and the displacement detecting means detects a displacement of a stylus on the tracer head, the profiling data storing means stores the detected position and displacement in predetermined periodic cycles. The position increment calculating means detects the position and displacement with respect to each of the axes of a profiling plane in each of the periodic cycles, and corrects an increment from the preceding detected position with an increment from the preceding detected displacement, thereby calculating a position increment. Based on the calculated position increment, the movement vector calculating means calculates a movement vector in a preceding movement zone. The axis movement control means regards the calculated movement vector as a profiling direction in a present movement zone for controlling movement along the axes of the tracer head.

Therefore, it is possible to reduce small variations of a profiling feed direction due to the corrective speed component. Particularly, if the shape of the model surface suffers small variations, then it is possible to obtain a profiling feed direction which is substantially constant, allowing stable profiling operation to be performed and accurate digitized data to be produced.

### BRIEF DESCRIPTION OF THE DRAWINGS

FIG. 1 is a block diagram showing the concept of functions of a profiling control system according to the present invention;

FIG. 2 is a block diagram of a profiling/machining system according to an embodiment of the present invention;

FIG. 3 is a block diagram of a specific arrangement of functions of the profiling control system according to the embodiment of the present invention;

FIG. 4 is a diagram illustrative of how to determine indexing signals in a normal state;

FIG. 5 is a flowchart of a basic processing sequence carried out by an indexing circuit;

FIG. 6 is a flowchart of specific processing operation of a step S3 of the flowchart shown in FIG. 5; and

FIG. 7 is a diagram illustrative of a conventional profiling control system for profiling a model surface with a stylus that is held in contact with the model surface.

BEST MODE FOR CARRYING OUT THE INVENTION

An embodiment of the present invention will hereinafter be described with reference to the drawings.

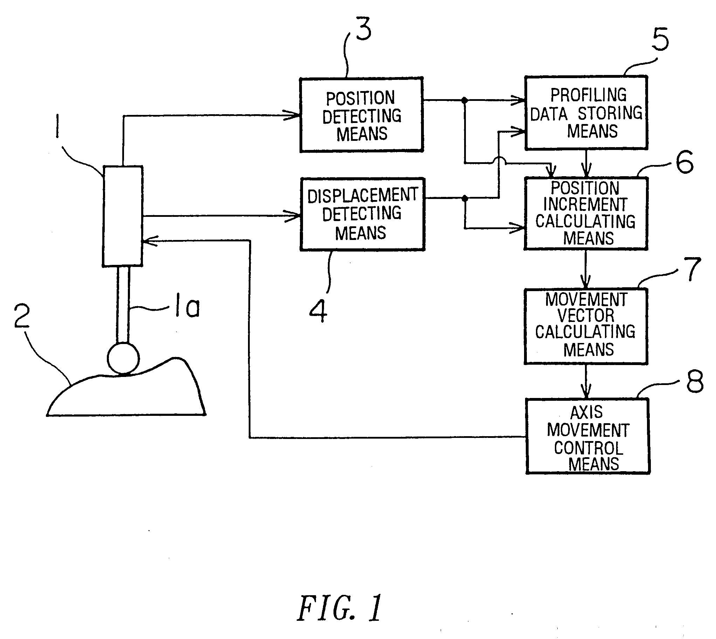

FIG. 1 is a block diagram showing the concept of, functions of a profiling control system according to the present invention. When a tracer head 1 traces the surface of a model 2, a position detecting means 3 detects the position of the tracer head 1. When a displacement detecting means 4 detects a displacement of a stylus 1a on the tracer head 1, a profiling data storing means 5 stores the detected position and displacement in predetermined periodic cycles. A position increment calculating means 6 detects the position and displacement with respect to each of the axes of a profiling plane in each of the periodic cycles, and corrects an increment from the preceding detected position with an increment from the preceding detected displacement, thereby calculating a position increment. Based on the calculated position increment, a movement vector calculating means 7 calculates a movement vector in a preceding movement zone. An axis movement control means 8 regards the calculated movement vector as a profiling direction in a present movement zone for controlling movement along the axes of the tracer head 1.

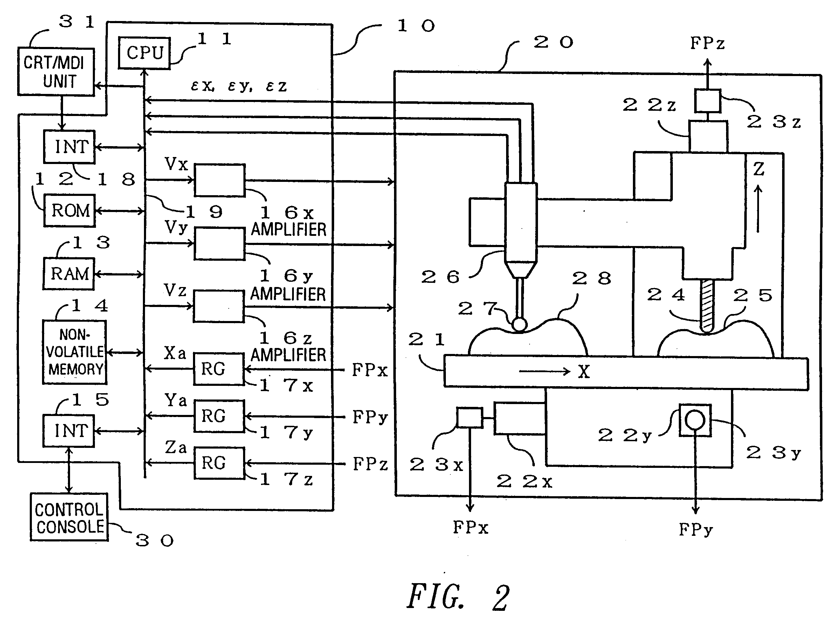

FIG. 2 is a block diagram of a profiling/machining system according to an embodiment of the present invention. The profiling/machining system comprises a profiling control apparatus 10 and a profiling machine tool 20. The profiling control apparatus 10 has a processor 11 which reads a system program stored in a ROM 12 through a bus 19, and controls overall operation of the profiling control apparatus 10 according to the system program. A RAM 13 stores temporary data. A non-volatile memory 14, which is backed up by a battery (not shown), stores various parameters relative to a profiling mode, a profiling plane, a profiling speed, etc. that are entered by keys on a panel (not shown) of a CRT/MDI unit 31. The non-volatile memory 14 also stores digitized data representing the shape of a model surface that has been measured by a tracer head 26 of the profiling machine tool 20.

The tracer head 26 of the profiling machine tool 20 detects displacements $\varepsilon x$, $\varepsilon y$, $\varepsilon z$ in respective X-, Y-, and Z-axis directions of a stylus 27 mounted on its tip end when the stylus 27 is held in contact with a model 28, and converts the detected displacements $\varepsilon x$, $\varepsilon y$, $\varepsilon z$ into digital data which are sent to the processor 11.

Based on the digital displacements $\varepsilon x$, $\varepsilon y$, $\varepsilon z$, a profiling mode, a profiling plane, and a profiling speed which are commanded, the processor 11 generates a speed command Vx for the X-axis, a speed command Vy for the Y-axis, and a speed command Vz for the Z-axis according to a procedure described later on. These speed commands are inputted respectively to servoamplifiers 16x, 16y, 16z, which produce output signals to energize respective servomotors 22x, 22y, 22z of the profiling machine tool 20.

Now, the tracer head 26 moves in the Z-axis direction in order to keep constant the relative positional relationship between the tracer head 26 and the model 28, and a table 21 moves in the X-axis direction and the Y-axis direction perpendicular to the sheet of FIG. 2 while a cutter 24 which is controlled in the Z-axis direction in the same manner as the tracer head 26 machines a workpiece 25 to the same shape as the model 28.

The servomotors 22x, 22y, 22z are associated with respective pulse coders 23x, 23y, 23z which generate respective detection pulses FPx, FPy, FPz each time the servomotors 22x, 22y, 22z rotate a predetermined angular interval. The profiling control apparatus 10 has present-position registers 17x, 17y, 17z for counting up or down the respective detection pulses FPx, FPy, FPz depending the direction in which the servomotors 22x, 22y, 22z rotate, thereby determining present-position data Xa, Ya, Za of the tracer head 26. The determined present-position data Xa, Ya, Za are read by the processor 11.

The processor 11 transmits a display image signal representing statuses of a profiling process through the bus 19 to the CRT/MDI unit 31. In the CRT/MDI unit 31, a graphic controller (not shown) coverts the display image signal into image data, and displays the image data on a display unit (not shown). The display unit displays a data entry screen for entering profiling conditions at the start of a profiling process. While seeing the data entry screen, the operator uses keys on the panel to enter a profiling mode, a profiling plane a profiling speed, etc. The entered profiling mode, profiling plane, profiling speed, etc. are read through an interface 18 onto the bus 19, and stored into the non-volatile memory 14.

To the bus 19, there is also connected a control console 30 through an interface 15. The control console 30 is used to enter a profiling process start command, a profiling process stop command, etc. These commands are sent through the interface 15 and the bus 19 to the processor 11.

A specific process of operation of the profiling control system according to the embodiment will be described below.

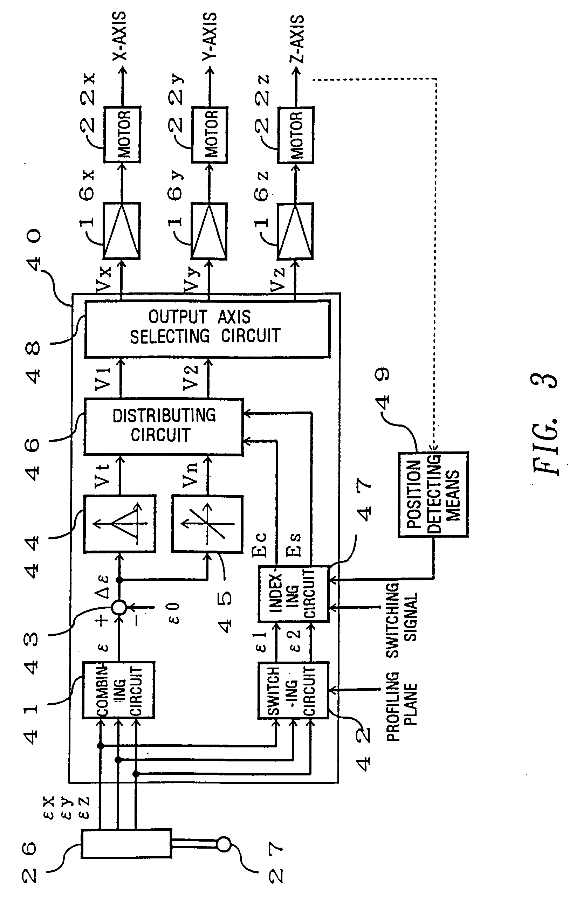

FIG. 3 is a block diagram of a specific arrangement of functions of the profiling control system according to the embodiment of the present invention. The tracer head 26 detects displacements εx, εy, εz in respective X-, Y-, and Z-axis directions of the stylus 27 mounted on its tip end when the stylus 27 is held in contact with the model 28, and transmits the detected displacements εx, εy, εz to an axis control functional block 40 which is a software-implemented function of the profiling control apparatus 10. The displacements εx, εy, εz supplied to the axis control functional block 40 are inputted to a combining circuit 41 and a switching circuit 42.

The combining circuit 41 determines a combined displacement ε ($\varepsilon = (\varepsilon x^2 + \varepsilon y^2 + \varepsilon z^2)^{1/2}$) from the displacements εx, εy, εz, and applies the combined displacement ε to an arithmetic unit 43. The arithmetic unit 43 calculates a difference Δε (Δε = ε - ε0) between the combined displacement ε and a preset reference displacement ε0, and supplies the calculated difference Δε to speed component generators 44, 45. The speed component generator 44 generates a feed speed component (tangential speed component) Vt perpendicular to the direction in which the stylus 27 is displaced, and sends the feed speed component Vt to a distributing circuit 46. The speed component generator 45 generates a feed speed component (normal speed component) Vn in the direction in which the stylus 27 is displaced, in proportion to the difference Δε, and sends the feed speed component Vn to the distributing circuit 46.

The switching circuit 42 selects, from the displacements εx, εy, εz, displacements ε1, ε2 along the two axes which make up the profiling plane that has been entered from the CRT/MDI unit 31 shown in FIG. 2, and applies the selected displacements ε1, ε2 to an indexing circuit 47. Until the tracer head 26 moves a given distance from the start of the profiling process, the indexing circuit 47 determines indexing signals Ec, Es according to the following equations (1), (2) using the displacements ε1, ε2:

$$Ec = \varepsilon 1/(\varepsilon 1^2 + \varepsilon 2^2)^{1/2} \qquad (1),$$
$$= \cos\theta$$

$$Es = \varepsilon 2/(\varepsilon 1^2 + \varepsilon 2^2)^{1/2} \qquad (2)$$
$$= \sin\theta$$

where θ is the angle which is the same as the angle θ formed between the vector component εxz and the X-axis as shown in FIG. 7. The displacement ε1 corresponds to the displacement εx, and the displacement ε2 corresponds to the displacement εz. The indexing signals Ec, Es thus determined are transmitted to the distributing circuit 46.

The indexing circuit 47 is supplied with data on present positions of the motors 22x, 22y, 22z which are detected by a position detecting means 49. The indexing circuit 47 reads the supplied positional data, and stores the position of the tracer head 26 and displacements ε1, ε2 of the stylus 27 which are projected onto the profiling plane each time the tracer head 26 has moved a predetermined distance (e.g., 1 mm). When the tracer head 26 has moved a given distance from the start of the profiling process, thus entering a normal state, the indexing circuit 47 determines indexing signals Ec, Es at the same time that it is supplied with a switching signal indicating the initiation of the normal state, as follows:

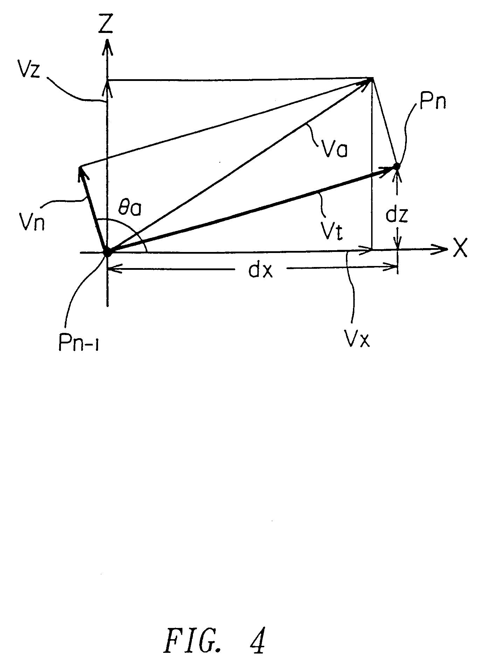

FIG. 4 is a diagram illustrative of how to determine indexing signals in the normal state. It is assumed that the tracer head 26 has been in a position Pn-1 in a preceding detecting cycle and is in a position Pn in a present detecting cycle. The positional relationship between the positions Pn-1, Pn is corrected by the addition of the displacements of the stylus 27 in the preceding and present detecting cycles. The profiling plane in FIG. 4 comprises the X-Z plan. It is also assumed that the tracer head 26 has moved a distance dx along the X-axis and a distance dz along the Z-axis between the positions Pn-1, Pn.

With the positions Pn-1, Pn determined, the indexing circuit 47 calculates a movement vector directed from the position Pn-1 toward the position Pn, and set it as the vector of the feed speed component Vt. When the feed speed component Vt is determined, the corrective speed component Vn can be determined as being perpendicular to the feed speed component Vt as shown in FIG. 4. If a feed axis comprises the X-axis and the angle of the corrective speed component Vn with respect to the X-axis is represented by θa, then the indexing signals Ec, Es are expressed as follows:

$$Ec = \cos\theta a$$
$$= - dz/(dx^2 + dz^2)^{1/2},$$

$$Es = \sin\theta a$$
$$= dx/(dx^2 + dz^2)^{1/2}.$$

Referring back to FIG. 3, the indexing circuit 47 sends the indexing signals Ec, Es to the distributing circuit 46.

Using the indexing signals Ec, Es, the feed speed signal Vt, and the corrective speed component Vn, the distributing circuit 46 calculates the following equations (3), (4):

$$V1 = Vt \times Es - Vn \times Ec \qquad (3),$$

$$V2 = - Vt \times Ec - Vn \times Es \qquad (4)$$

where V1 and V2 are speed components along the two axes of the profiling plane, which correspond to the X- and Z-axes, respectively, in FIG. 4. These speed components V1, V2 are outputted as speed signals Vx, Vy, Vz along the X-, Y-, and Z-axes through an output axis selecting circuit 48.

The servoamplifiers 16x, 16z produce output signals to energize the respective servomotors 22x, 22z for thereby moving the table 21 shown in FIG. 2. As a result, the stylus 27 moves with respect to the model 28 in the direction of a profiling speed Va (see FIG. 4) which is a combination of the speed components V1, V2. The servoamplifier 16z produces an output signal to energize the servomotor 22z for thereby moving the cutter 24 shown in FIG. 2 in the direction of the Z-axis, while the tracer head 26 is being moved.

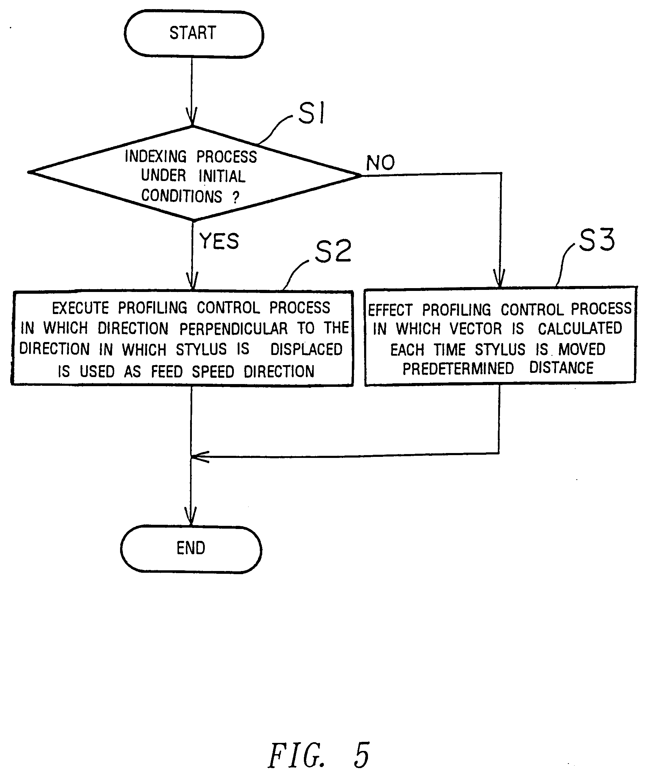

FIG. 5 is a flowchart of a basic processing sequence carried out by the indexing circuit 47.

[S1] The indexing circuit 47 determines whether its indexing process is under initial conditions, i.e., whether the tracer head 26 has moved within a predetermined distance from the start of the profiling process, or not. If so, then control goes to a step S2, and if not, then control goes to a step S3.

[S2] The indexing circuit 47 executes a profiling control process in which a direction perpendicular to the direction in which the stylus 27 is displaced is used as the feed speed component Vt.

[S3] Each time the tracer head 26 moves a given distance, the indexing circuit 47 calculates the vector of the direction of movement in a preceding movement zone, and effects a profiling control process in which the calculated vector is used as the feed speed component Vt.

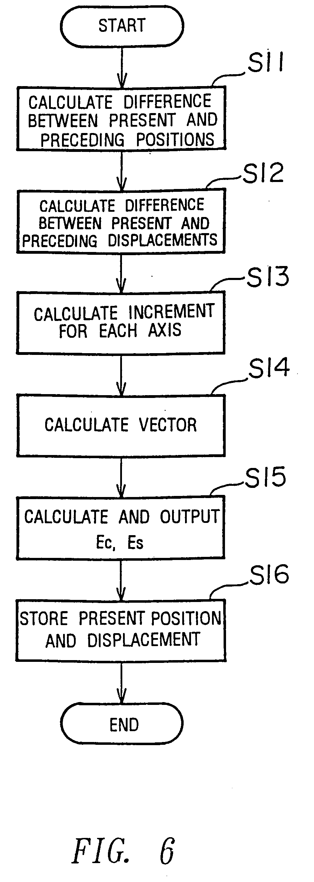

FIG. 6 is a flowchart of specific processing operation of the step S3 of the flowchart shown in FIG. 5.

[S11] The indexing circuit 47 calculates the positional difference between the present detected position of the tracer head 26 and the preceding detected position of the tracer head 26 with respect to each of the axes of the profiling plane.

[S12] The indexing circuit 47 calculates the displacement difference between the present detected displacement of the stylus 27 and the preceding detected displacement of the stylus 27 with respect to each of the axes of the profiling plane.

[S13] The indexing circuit 47 adds the positional difference and the displacement difference which have been calculated, thus calculating a positional increment in the preceding movement zone that has been finished with respect to each of the axes of the profiling plane.

[S14] The indexing circuit 47 calculates the vector in the preceding movement zone, and uses the calculated vector as the direction of a profiling speed in the present movement zone.

[S15] Based on the calculated vector, the indexing circuit 47 calculates indexing signals Ec, Es, and sends the calculated indexing signals Ec, Es to the distributing circuit 46.

[S16] The indexing circuit 47 stores the detected position and displacement.

According to this embodiment, as described above, in the normal state, the movement vector of the direction of movement in the preceding movement zone which is finished is calculated each time the stylus 26 is moved a predetermined distance, and the calculated movement vector is used as the direction of a present profiling speed. Therefore, it is possible to reduce small variations of a profiling feed direction due to the corrective speed component as compared with the conventional system in which the corrective speed component is successively determined and a direction perpendicular to the corrective speed component is used as the direction of a feed speed. Particularly, if the shape of the model surface suffers small variations, then it is possible to obtain a profiling feed direction which is substantially constant, allowing accurate digitized data to be produced.

Furthermore, since the conventional profiling control is carried out while the indexing process is under initial conditions until the tracer head 26 is moved a predetermined distance from the start of the profiling process, an accurate profiling control process can be effected in the absence of sampling data. This is because when the profiling process is started, the friction between the stylus 27 and the model 28 is small, so that the generated corrective speed component is small, allowing the tracer head 26 to move substantially parallel to the model surface.

In this embodiment, each predetermined periodic cycle for detecting the position and displacement is set to correspond to a predetermined distance which the tracer head 26 is moved. However, each predetermined periodic cycle for detecting the position and displacement may be set to correspond to a predetermined period of time over which the tracer head 26 is moved. The predetermined distance that the tracer head 26 is moved may be a three-dimensional combination of distances that the tracer head 26 is moved, or a distance that the tracer head 26 is moved in the direction of a particular axis.

In this embodiment, the indexing circuit 47 separately calculates the positional difference between the present and preceding positions and the displacement difference between the present and preceding displacements, and adds the calculated differences into a positional increment. However, the indexing circuit 47 may calculate the sum of the present detected position and displacement and the sum of the preceding detected position and displacement, and subtract the preceding sum from the present sum.

According to the present invention, as described above, a position and a displacement are detected with respect to each of the axes of the profiling plane in each predetermined periodic cycle, an increment from the preceding detected position is corrected with an increment from the preceding detected displacement, thus calculating a positional increment, a movement vector in the preceding movement zone is calculated based on the calculated positional increment, and the movement of the tracer head along the axes is controlled using the calculated movement vector as a profiling direction in the present movement zone. Therefore, it is possible to reduce small variations of a profiling feed direction due to the corrective speed component. Particularly, if the shape of the model surface suffers small variations, then it is possible to obtain a profiling feed direction which is substantially constant, allowing stable profiling operation to be performed and accurate digitized data to be produced.

**Claims**

1. A profiling control system for measuring the shape of a model surface through profiling operation, comprising:

    position detecting means for detecting a position of a tracer head;

    displacement detecting means for detecting a displacement of a stylus mounted on the tracer head;

    profiling data storing means for storing the detected position and the detected displacement in each of predetermined periodic cycles;

    positional increment calculating means for detecting said position and said displacement with respect to each of axes of a profiling plane in each of the predetermined periodic cycles, and correcting an increment from a preceding detected position with an increment from a preceding detected displacement, thereby calculating a positional increment;

    movement vector calculating means for calculating a movement vector in a preceding movement zone based on the calculated positional increment; and

    axis movement control means for controlling movement along the axes of said tracer head using the calculated movement vector as a profiling direction in a present movement zone.

2. A profiling control system according to claim 1, wherein said each of predetermined periodic cycles is established so as to correspond to a distance which said tracer head is moved.

3. A profiling control system according to claim 1, wherein said each of predetermined periodic cycles is established so as to correspond to a period of time over which said tracer head is moved.

4. A profiling control system according to claim 1, wherein said axis movement control means comprises means for controlling movement along the axes of said tracer head using a direction perpendicular to a direction, projected onto said profiling plane, of displacement of said stylus, as said profiling direction in an initial state of a profiling process.

5. A profiling control system according to claim 1, wherein said positional increment calculating means comprises means for calculating the difference between a present detected position and the preceding detected position, and the difference between a present detected displacement and the preceding detected displacement, and adding the calculated differences.

6. A profiling control system according to claim 1, wherein said positional increment calculating means comprises means for calculating the sum of a present detected position and a present detected displacement and the sum of the preceding detected position and the preceding detected displacement, and subtracting said sum of the preceding detected position and the preceding detected displacement from said sum of the present detected position and the present detected displacement.

*FIG. 1*

FIG. 2

EP 0 704 277 A1

EP 0 704 277 A1

*FIG. 3*

*FIG. 4*

START

S1

INDEXING PROCESS
UNDER INITIAL
CONDITIONS ?

NO

YES

S2

EXECUTE PROFILING CONTROL PROCESS
IN WHICH DIRECTION PERPENDICULAR TO THE
DIRECTION IN WHICH STYLUS IS DISPLACED
IS USED AS FEED SPEED DIRECTION

S3

EFFECT PROFILING CONTROL PROCESS
IN WHICH VECTOR IS CALCULATED
EACH TIME STYLUS IS MOVED
PREDETERMINED DISTANCE

END

FIG. 5

START

$S11$

CALCULATE DIFFERENCE
BETWEEN PRESENT AND
PRECEDING POSITIONS

$S12$

CALCULATE DIFFERENCE
BETWEEN PRESENT AND
PRECEDING DISPLACEMENTS

$S13$

CALCULATE INCREMENT
FOR EACH AXIS

$S14$

CALCULATE VECTOR

$S15$

CALCULATE AND OUTPUT
Ec, Es

$S16$

STORE PRESENT POSITION
AND DISPLACEMENT

END

*FIG. 6*

FIG. 7

**INTERNATIONAL SEARCH REPORT**

International application No.

PCT/JP95/00457

| A. CLASSIFICATION OF SUBJECT MATTER |
| --- |
| Int. Cl⁶  B23Q35/12 |
| According to International Patent Classification (IPC) or to both national classification and IPC |

| B. FIELDS SEARCHED |
| --- |
| Minimum documentation searched (classification system followed by classification symbols) |
| Int. Cl⁶  B23Q35/12 |

Documentation searched other than minimum documentation to the extent that such documents are included in the fields searched

| Jitsuyo Shinan Koho | 1926 - 1995 |
| Kokai Jitsuyo Shinan Koho | 1971 - 1995 |

Electronic data base consulted during the international search (name of data base and, where practicable, search terms used)

| C. DOCUMENTS CONSIDERED TO BE RELEVANT | | |
| --- | --- | --- |
| Category* | Citation of document, with indication, where appropriate, of the relevant passages | Relevant to claim No. |
| A | JP, 4-115853, A (Fanuc Ltd.),<br>April 16, 1992 (16. 04. 92),<br>Fig. 1 (Family: none) | 1 - 6 |
| A | JP, 57-178647, A (Fanuc Ltd.),<br>November 2, 1982 (02. 11. 82),<br>Lines 7 to 20, column 9 (Family: none) | 1 |

☐ Further documents are listed in the continuation of Box C.　　☐ See patent family annex.

| * Special categories of cited documents:<br>"A" document defining the general state of the art which is not considered to be of particular relevance<br>"E" earlier document but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |
| --- | --- |

| Date of the actual completion of the international search | Date of mailing of the international search report |
| --- | --- |
| June 5, 1995 (05. 06. 95) | June 27, 1995 (27. 06. 95) |

| Name and mailing address of the ISA/ | Authorized officer |
| --- | --- |
| Japanese Patent Office | |
| Facsimile No. | Telephone No. |

Form PCT/ISA/210 (second sheet) (July 1992)